# EUROPÄISCHE PATENTSCHRIFT

(11) **EP 2 151 323 B1**
(45) Veröffentlichungstag und Bekanntmachung des Hinweises auf die Patenterteilung: **22.02.2017**
(21) Anmeldenummer: 09009851.8
(22) Anmeldetag: 30.07.2009
(51) Int. Cl.: B32B 33/00

(54) **VERPACKUNGSMATERIAL**
PACKAGING MATERIAL
MATÉRIAU D'EMBALLAGE

(30) Priorität: 01.08.2008 DE 102008035881
(43) Veröffentlichungstag der Anmeldung: 10.02.2010
(73) Patentinhaber: Amcor Flexibles Kreuzlingen Ltd., 8280 Kreuzlingen (CH)
(72) Erfinder: Yildirim, Selcuk, 8048 Zürich (CH); Jammet, Jean-Claude, 8212 Neuhausen (CH)
(74) Vertreter: Gernet, Samuel Andreas

(56) Entgegenhaltungen:
- WO-A1-2005/016654
- WO-A1-2006/015962
- WO-A2-03/077227

## Beschreibung

Die Erfindung betrifft ein Verpackungsmaterial aufweisend eine Struktur einer Anzahl von Schichten. Weiter betrifft die Erfindung eine Verpackung, eine Verpackungs-Produkt-Einheit sowie ein Verfahren zur Kennzeichnung und Prüfung einer Verpackung.

Verderbliche oder in sonstiger Weise angreifbare Produktmaterialien lassen sich in zunehmend sicherer Weise in einer Verpackung unterbringen, die aus besonders zuverlässigem Verpackungsmaterial gefertigt ist, um den Erhalt des Produktmaterials bestmöglich zu sichern. Gleichwohl hat es sich bei besonders anfälligen Produktmaterialien als vorteilhaft erwiesen, das Alter des Produktmaterials in der Verpackung auf der Verpackung kenntlich zu machen.

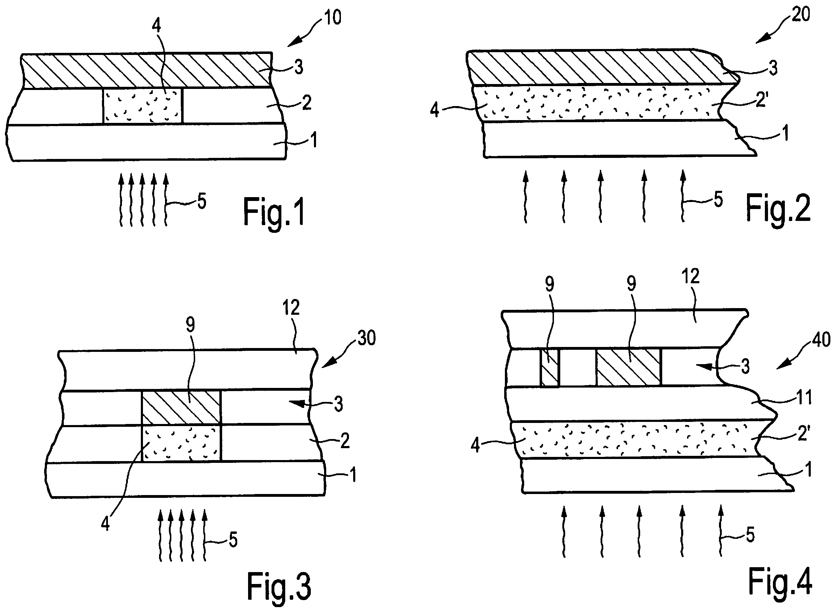

So ist aus WO 2005/016654 und WO 2006/015952 ein Verfahren bekannt, bei dem ein Aufkleber mit einem so genannten Zeit-Temperatur-Integrator versehen ist, welcher wenigstens einen Indikator mit photochromen auf Transfer-Reaktionen beruhenden Eigenschaften aufweist. Der Zeit-Temperatur-Integrator wird aufgedruckt und der Aufkleber od. dgl. "Label" wird auf das Produkt oder auf die Produktverpackung aufgebracht. Ein solcher in Fig. 4 der vorliegenden Anmeldung symbolisch dargestellter Indikator eines Aufklebers auf einer Produktverpackung muss jedoch - vor dem Aufbringen auf das Produkt oder die Produktverpackung - von oben aktiviert werden. Anschießend muss der Indikator, mindestens nach oben, gegen eine ungewollte Photo-Deaktivierung durch Aufbringen einer entsprechenden Blocker-Schicht geschützt werden. Anschließend kann der Aufkleber auf das Produkt oder die Produktverpackung aufgeklebt werden.

Aus WO 03/077227 ist ein Etikett mit Zeit- und Temperaturfunktion bekannt, wobei das Etikett ein Substrat aufweist und durch Kontakt der beiden Substratseiten das Etikett aktiviert wird.

Nachteilig dabei ist, dass bereits das Aufbringen des Aufklebers oder Anbringen des "Labels" am Produkt oder an der Produktverpackung vergleichsweise aufwändig und damit vergleichsweise teuer ist. Darüber hinaus hat sich gezeigt, dass aufgrund der vom Label nur begrenzt bedruckten Fläche auf dem Produkt oder der Produktverpackung regelmäßig nicht gewährleistet ist, dass eine Photo-Deaktivierung von hinten durch eine photodurchlässige Produktverpackung oder durch das photodurchlässige Produkt sicher unterbunden wäre. Dies kann regelmäßig zu einer verfälschten Anzeige des Indikators führen.

Wünschenswert wäre eine einfachere Anwendung eines Indikators in Bezug auf ein Verpackungsmaterial, insbesondere verlässlichere Deaktivierungs-Eigenschaften, wobei insbesondere verfälschende Photo-Deaktivierungen eines Indikators vermieden werden sollten.

An dieser Stelle setzt die Erfindung an, deren Aufgabe es ist, ein Verpackungsmaterial, eine Verpackung und eine Verpackungs-Produkt-Einheit anzugeben, sowie ein Verfahren zur Kennzeichnung und ein Verfahren zur Prüfung einer Verpackungs-Produkt-Einheit anzugeben, bei dem die Realisierung eines Indikators in einfacherer Weise und insbesondere verlässlicher realisiert ist.

Hinsichtlich des Verpackungsmaterials wird die Aufgabe durch die Erfindung mit einem Verpackungsmaterial der eingangs genannten Art gelöst, bei der erfindungsgemäß die Schichtstruktur der Anzahl von Schichten umfasst:
- eine Substratschicht;
- wenigstens eine der Schichtstruktur innenliegende Indikatorschicht, die wenigstens abschnittsweise eine Indikatorsubstanz mit einem reversiblen Indikator aufweist, welcher unter Photo-Aktivierung seine Erscheinung sichtbar ändert;
- eine Photo-Blocker-Schicht, welche wenigstens in einem Teilbereich photo-blockend ist.

Die Erfindung führt entsprechend auch auf eine Verpackung mit dem Verpackungsmaterial gemäß dem Konzept der Erfindung.

Unter einem Verpackungsmaterial der genannten Art ist insbesondere eine Folie oder ein Verbund od.dgl. flaches Material zu verstehen. Das Verpackungsmaterial der eingangs genannten Art soll insbesondere zum Herstellen einer Verpackung dienen. Eine Verpackung weist vorzugsweise eine Folie oder ein Folienverbund und/oder ein Verpackungsbehältnis auf, welche zumindest teilweise das eingangs genannte Verpackungsmaterial enthalten.

Unter Photo-Aktivierung ist grundsätzlich jede elektromagnetische Aktivierung mit "Licht", insbesondere im UV-, Vis- oder IR-Bereich zu verstehen. Entsprechend ist die Blocker-Schicht absorbierend für "Licht" ausgelegt.

Die Erfindung geht von der Überlegung aus, dass die Nachteile des Standes der Technik wesentlich dadurch verursacht sind, dass ein mit dem Indikator versehener Aufkleber auf dem Produkt oder der Produktverpackung angebracht werden muss. Die Erfindung hat erkannt, dass die Aufgabe in besonders vorteilhafter Weise dadurch gelöst werden kann, dass der reversible Indikator im Verpackungsmaterial bereits integriert ist. Demgemäß sieht die Erfindung vor, dass wenigstens eine der Schichtstruktur innenliegende Indikatorschicht wenigstens abschnittsweise eine Indikatorsubstanz mit einem reversiblen Indikator aufweist, welcher unter Photo-Aktivierung seine Erscheinung sichtbar ändert.

Dadurch wird es gemäß dem Konzept der Erfindung vorteilhaft ermöglicht, dass mit Herstellung des Verpackungsmaterials der reversible Indikator ebenfalls in das Material integriert ist. Dies vermeidet eine kostenaufwändige nachträgliche Aufbringung von Aufklebern od. dgl. "Label".

Betreffend das Verfahren zur Kennzeichnung einer Verpackung, insbesondere einer Verpackungs-Produkt-Einheit, wird die Aufgabe durch die Erfindung mit einem Verfahren der eingangs genannten Art gelöst, das erfindungsgemäß die Schritte aufweist:
- Herstellen eines Verpackungsmaterials gemäß dem Konzept der Erfindung, wobei die Herstellung mit einer Photo-Blocker-Schicht erfolgt, welche wenigstens in einem Teilbereich photo-blockend ist.

Die Herstellung des Verpackungsmaterials kann grundsätzlich in mehreren Arbeitsschritten erfolgen. In einer besonders bevorzugten Weise wird damit erreicht, dass die Schichtstruktur als Herstellungseinheit darstellbar ist. Dadurch wird vor allem die aus dem Stand der Technik bekannte "Aufkleber-Lösung" vermieden, wobei ein neben dem Verpackungsmaterial separat zur Verfügung zu stellender Aufkleber in einem getrennten Arbeitsschritt auf die fertige Verpackungs-Produkteinheit aufgebracht werden muss. In einer ganz besonders sich vorteilhaft vom Stand der Technik abhebenden Herstellungsweise erfolgt die Herstellung des Verpackungsmaterials in einem gleichen Herstellungsverfahren zusammen mit einer Photo-Blocker-Schicht. Im letzteren Fall kann die Photo-Blocker-Schicht zur Darstellung der Herstellungseinheit z.B. zusammen mit dem Verpackungsmaterial grundsätzlich durch Extrudieren, Coden od. dgl. bekannte Vorgänge in einem Herstellungsvorgang erfolgen. Es kann auch zur Darstellung einer Herstellungseinheit der Schichtstruktur eine Photo-Blocker-Schicht aufgedruckt werden oder anderweitig auf ein Substrat eines Verpackungsmaterials aufgebracht sein, welches die Indikatorschicht gemäß dem Konzept der Erfindung trägt.

In einer weiteren bevorzugten Weiterbildung ist einer oder mehrere der Schritte vorgesehen:
- Herstellen der Verpackung mit dem Verpackungsmaterial;
- Einbringen des Produkts in die Verpackung;
- Aktivieren des reversiblen Indikators beim Verschließen der Verpackung von einer dem Produkt zugewandten Seite des Verpackungsmaterials.

Die Erfindung geht hinsichtlich des Verfahrens zur Kennzeichnung davon aus, dass die Aktivierung zeitlicher Triggerung des Indikators im Verpackungsmaterial zum Zeitpunkt des Verschließens der Verpackung erfolgen kann, und zwar von einer dem Produkt zugewandten Seite des Verpackungsmaterials. In der Praxis könnte beispielsweise eine Aktivierung des Indikators kurz vor Verschließen der Verpackung mit entsprechenden photo-belichtenden Mitteln zur Photo-Aktivierung des Indikators erfolgen.

Im Rahmen einer besonders bevorzugten Weiterbildung hat sich dazu ein Verpackungsmaterial als vorteilhaft erwiesen, bei dem, auf einer der Verpackungsinnenseite näher zu liegenden Seite der Indikatorschicht liegende, weitere Schichten der Schichtstruktur nicht photo-blockend, insbesondere photo-transparent sind. Hierunter fällt auch eine Ausführungsvariante, bei der auf der der Verpackungsinnenseite näher zu liegenden Seite ausschließlich eine nicht photo-blockende Schicht, insbesondere die Substratschicht, vorgesehen ist. Das Vorsehen mindestens einer derartigen nicht photo-blockenden Schicht hat nicht nur den Vorteil, dass gemäß dem erfindungsgemäßen Konzept eine Photo-Aktivierung des Indikators "von hinten" beim Verschließen der Verpackungsprodukteinheit erfolgen kann, sondern darüber hinaus auch den Vorteil, dass eine erhebliche Kosteneinsparung erreicht wird, da eine photo-blockierende Eigenschaft bei rückseitigen Schichten weitgehend unnötig sind. Dennoch ist die Verlässlichkeit des Indikators dadurch gesichert, dass gemäß dem Konzept der Erfindung eine Photo-Blocker-Schicht, zumindest in einem Bereich oberhalb eines Indikators, durchgehend oder nicht durchgehend photo-blockend ist.

Bei einer alternativen Ausführungsform ist auf einer der Verpackungsinnenseite näher liegenden Seite auf der Indikator-Schicht mindestens eine Schicht, insbesondere eine Kunststoffschicht, wie PET-Schicht und/oder eine Glasdünnschicht-Schicht und/oder Metallschicht, beispielsweise eine Aluminiumschicht, vorzugsweise die Substratschicht, der Schichtstruktur vorgesehen, die photo-blockend, insbesondere UV-blockend, ist. Es handelt sich also bevorzugt um ein Verpackungsmaterial mit mindestens einer Barriereschicht auf der von der Verpackungsaussenseite abgewandten Seite der Indikatorschicht. Um auch bei einem derartigen Verpackungsmaterial eine Photo-Aktivierung "von hinten" zu ermöglichen ist in Weiterbildung der Erfindung vorgesehen, dass in der mindestens photo-blockenden Schicht eine Materialaussparung vorgesehen durch die hindurch der Indikator photo-aktivierbar ist, d.h. durch die hindurch Licht dringen kann. Anders ausgedrückt wird in der mindestens einen photo-blockenden Schicht ein Fenster vorgesehen, durch das hindurch der Indikator aktivierbar ist. Im Falle des Vorsehens mehrerer photo-blockender Schichten, sollte in jeder dieser Schichten eine Aussparung vorgesehen sein, wobei sich die Aussparungen zumindest abschnittsweise überdecken sollten. Eine in diesem Abschnitt beschriebene Ausführungsform des Verpackungsmaterials und einer daraus hergestellten Verpackung ermöglicht ebenfalls eine Photo-Aktivierung des Indikators unmittelbar vor dem Schließen der Verpackung, vorzugsweise durch Siegeln.

In besonders vorteilhafter Weise ist die Photo-Blocker-Schicht eine außenliegende Schicht. Alternativ kann die Photo-Blocker-Schicht auch eine der Schichtstruktur innenliegende Schicht sein, dies aber auf einer der Verpackungsaußenseite näher zu liegenden Seite der Indikatorschicht.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Das Konzept der Erfindung bietet die Möglichkeit einer Darstellung der Schichtstruktur als Herstellungseinheit, welche im Rahmen einer besonders bevorzugten Weiterbildung der Erfindung realisiert ist. Eine Indikatorschicht und Photo-Blocker-Schicht wird somit im Rahmen einer Schichtstruktur als Herstellungseinheit dargestellt. Dies kann auf unterschiedliche Weise erfolgen, so z.B. durch Extrusionsbeschichtungs- oder Druckverfahren wie sie bekannt sind.

Hinsichtlich des Schichtaufbaus der Schichtstruktur sind grundsätzlich das Konzept der Erfindung berücksichtigende verschiedene Weiterbildungen möglich. So kann die Schichtstruktur insbesondere - neben der Substratschicht der Indikatorschicht und der Photo-Blocker-Schicht - weitere Schichten aufweisen, insbesondere auch eine weitere Schicht zwischen der Indikatorschicht und der Photo-Blocker-Schicht oder eine weitere Schicht auf der Photo-Blocker-Schicht. Auch muss die Indikatorschicht keinesfalls direkt auf der Substratschicht aufgebracht sein - vielmehr hat es sich als vorteilhaft erwiesen, zwischen der Substratschicht und der Indikatorschicht beispielsweise Haftvermittlerschichten oder funktionelle Schichten od. dgl. vorzusehen.

Eine vorteilhaft besonders einfach aufgebaute Schichtstruktur sieht vor, dass die Indikatorschicht und die Photo-Blocker-Schicht direkt aufeinander angebracht sind.

Es hat sich insbesondere als vorteilhaft erwiesen, dass die Photo-Blocker-Schicht durchgehend photo-blockend ist. Um darüber hinaus eine ungewollte Photo-Deaktivierung des reversiblen Indikators sicher zu vermeiden, sieht diese Weiterbildung der Erfindung vor, dass eine Photo-Blocker-Schicht durchgehend photo-blockend ist. Dies hat den entscheidenden Vorteil, dass - bei in der Verpackung integriertem reversiblem Indikator - eine ungewollte Photo-Deaktivierung jedenfalls durch das Verpackungsmaterial unterbunden ist. Dagegen ist eine ungewollte Photo-Deaktivierung durch das Verpackungsmaterial gemäß dem Stand der Technik eben nicht sicher vermieden, da sich zwangsläufig eine etwaige Photo-Blocker-Schicht lediglich auf den Bereich des Aufklebers oder Labels beschränkt - das umliegende Verpackungsmaterial ist üblicherweise jedoch photo-transparent, was regelmäßig zu einer ungewollten Photo-Deaktivierung des Indikators "von hinten" durch das Verpackungsmaterial hindurch führt.

In einer anderen Weiterbildung kann auch vorgesehen sein, dass der wenigstens eine photo-blockende Teilbereich der Photo-Blocker-Schicht nur oder wenigstens diejenigen Abschnitte der Indikatorschicht überdeckt, welche eine Indikatorsubstanz aufweisen. Diese Maßnahme kann sich ggf. aus Kostengründen und im Rahmen bestimmter Herstellungsverfahren als vorteilhaft erweisen. Eine solche Maßnahme kann auch sinnvoll sein, wenn eine ungewollte Photo-Deaktivierung der Indikatorsubstanz weitgehend vernachlässigbar sein sollte. Grundsätzlich ist es ausreichend wenn auf einer fertigen, aus dem Verpackungsmaterial hergestellten Verpackung, insbesondere in deren Siegelbereich, ein einziger Indikatorabschnitt, vorzugsweise ein kleinflächiger, eine beliebige Form aufweisender, wie beispielsweise kreisförmiger, jedenfalls nicht vollflächiger, d.h. nicht durchgehender, Indikatorabschnitt vorgesehen ist oder einige wenige Indikatorabschnitte vorgesehen sind. Dies kann mit Vorteil dadurch erreicht werden, dass der vorzugsweise durch Drucken aufgebrachte Indikator (Indikatormaterial) in einem definierten Druckmuster vorgesehen wird, welches bevorzugt so beschaffen ist (d.h. die Indikatorabschnitte so verteilt aufgedruckt werden), dass auf jeder aus dem, vorzugsweise als Rollenware bereitgestellten, Verpackungsmaterial hergestellten Verpackung mindestens ein Indikatorabschnitt, vorzugsweise jeweils ausschließlich ein Indikatorabschnitt, insbesondere in einem keinen Produktkontakt aufweisenden Siegelbereich vorgesehen wird/ist.

In einer nochmals anderen Weiterbildung gemäß dem Konzept der Erfindung kann die Indikatorsubstanz durchgehend in der Indikatorschicht angeordnet sein. In anderen Weiterbildungen muss dies nicht unbedingt der Fall sein. Grundsätzlich bietet diese Weiterbildung die Möglichkeit, dass die Photo-Blocker-Schicht lediglich in einem Teilbereich photo-blockend ist und dennoch die Indikatorsubstanz durchgehend in der Indikatorschicht angeordnet ist. Dies würde dazu führen, dass die Indikatorsubstanz in den nicht von photo-blockenden Teilbereichen überdeckten Bereichen praktisch unmittelbar wieder photodeaktiviert wird während - in einem vom Verbraucher erkennbaren Kontrast dazu - die durch einen photo-blockenden Teilbereich abgedeckten Bereiche der Indikatorschicht die gewünschte Indikatorfunktion ausführen können.

Grundsätzlich bietet das Konzept der Erfindung also zum einen die Möglichkeit von Weiterbildungen, bei denen photo-blockende Teilbereiche der Photoblockerschicht die die Indikatorsubstanz enthaltenden Teilbereiche der Indikatorschicht vollständig überdecken als auch Weiterbildungen derart, in welchen die photo-blockenden Teilbereiche die eine Indikatorsubstanz enthaltenden Teilbereiche der Indikatorschicht nur teilweise überdecken.

In einer besonders bevorzugten Weiterbildung ist die Photo-Aktivierung eine UV-Aktivierung und die Photo-Blocker-Schicht eine UV-Blocker-Schicht. Eine UV-Aktivierung und gleichzeitige UV-Blockierung in der UV-Blockerschicht bei einem erfindungsgemäßen Verpackungsmaterial hat sich als besonders zweckmäßig erwiesen. Insbesondere bieten sich eine Reihe von Substanzen zur UV-Aktivierung an, wie sie beispielsweise in den eingangs genannten Stand der Technik-Dokumenten WO 2005/016654 und WO 2006/015962 genannt sind - deren Offenbarungsgehalt wird hiermit durch Zitat in den Offenbarungsgehalt der vorliegenden Anmeldung aufgenommen. Dies betrifft insbesondere die in den beiden zuvor genannten Dokumenten offenbarten reversiblen Indikatoren. Insbesondere die vorteilhaften dort genannten reversiblen Indikatoren haben photochrome Eigenschaften derart, dass eine photoinduzierte, insbesondere UV-induzierte, Färbung des Indikators erfolgt. Vorteilhaft beruhen die photochromen Eigenschaften des Indikators auf einer Transfer-Reaktion. Als besonders vorteilhaft hat sich ein Transfer von geladenen oder ungeladenen Wasserstoff-Atomen oder Wasserstoff-Isotopen erwiesen. Nähere Einzelheiten zu einer solchen Transfer-Reaktion od.dgl. ist den beiden zuvor genannten Dokumenten WO 2005/016654 und WO 2006/015962 zu entnehmen, deren Offenbarungsgehalt, insbesondere die Transfer-Reaktion, hiermit durch Zitat in den Offenbarungsgehalt der vorliegenden Anmeldung aufgenommen ist.

Hinsichtlich einer, vorteilhaft der Verpackungsinnenseite näher zu liegenden Seite der Indikatorschicht liegenden, weiteren Schicht der Schichtstruktur sollte diese - dem grundsätzlichen erfinderischen Konzept folgend - nicht photo-blockend, insbesondere nicht UV-blockend sein, d.h. insbesondere UV-transparent sein. Es hat sich darüber hinaus gezeigt, dass auch wenigstens weitere, vorzugsweise alle anderen Schichten der Schichtstruktur nicht photo-blockend, insbesondere nicht UV-blockend sind. In besonders vorteilhafter Weise sind die weiteren Schichten phototransparent, insbesondere UV-transparent.

Bei einer alternativen Ausführungsform ist auf einer der Verpackungsinnenseite näher liegenden Seite der Indikator-Schicht mindestens eine Schicht, insbesondere eine PET-Schicht und/oder eine Glasdünnschicht-Schicht (z.B. CERA-MIS-Schicht) und/oder Metallschicht, beispielsweise eine Aluminiumschicht, der Schichtstruktur vorgesehen, die photo-blockend, insbesondere UV-blockend, ist. Bevorzugt handelt es sich bei der Substratschicht oder bei einer zur Substratschicht benachbarten Schicht um eine solche photo-blockende Schicht. Um auch bei einem derartigen Verpackungsmaterial eine Photo-Aktivierung "von hinten" zu ermöglichen, ist in Weiterbildung der Erfindung vorgesehen, dass in der mindestens einen der Verpackungsinnenseite zugewandten photo-blockenden Schicht eine Materialaussparung vorgesehen durch die hindurch der Indikator photo-aktivierbar ist, d.h. durch die hindurch Licht dringen kann. Anders ausgedrückt wird in der mindestens einen photo-blockenden Schicht ein lichtdurchlässiges, ggf. mit lichtdurchlässigem Material, insbesondere einer Schicht der Schichtstruktur, gefülltes Fenster vorgesehen, durch das hindurch der Indikator aktivierbar ist. Im Falle des Vorsehens mehrerer photo-blockender Schichten, sollte in jeder dieser Schichten eine lichtdurchlässige Aussparung oder dergleichen vorgesehen sein, wobei sich die Aussparungen zumindest abschnittsweise überdecken sollte. Eine in diesem Abschnitt beschriebene Ausführungsform des Verpackungsmaterials und einer daraus hergestellten Verpackung ermöglicht ebenfalls eine Photo-Aktivierung des Indikators unmittelbar vor dem Schließen, vorzugsweise durch Siegeln, der Verpackung.

Als besonders vorteilhaft hat es sich erwiesen, dass vor allem eine Siegelschicht oder eine funktionale Schicht eine nicht photo-blockende, insbesondere nicht UV-blockende Schicht ist. Dies hat Vorteile hinsichtlich der Herstellungskosten.

Das oben erläuterte weiterbildende Konzept der photochromen Eigenschaften bezüglich dem UV-Bereich von Licht kann ebenso im IR-Bereich von Licht und/oder im VIS-Bereich von Licht realisiert werden oder in anderen Frequenzbereichen elektromagnetischer Strahlung, die es ermöglichen eine photochrome Eigenschaft eines Indikators zu aktivieren.

Während die Erfindung als besonders nützlich für die Anwendung betreffend integrierender Indikatoren ist, insbesondere reversibler Indikatoren in Form von Zeit-Temperatur integrierender Indikatoren (TTI-Indikatoren), welche durch Zeit und Temperatur reversibel ausgestaltet sind, so haben sich auch andere integrierende Indikatoren als im Rahmen des erfinderischen Konzepts vorteilhaft realisierbar erwiesen. So hat sich auch ein reversibler Indikator in Form eines GI-Indikators als vorteilhaft erwiesen, welcher durch Gas, insbesondere O₂ oder CO₂ reversibel ausgestaltet ist. Darüber hinaus kann sich das Konzept der Erfindung im Rahmen einer Weiterbildung auch eines reversiblen Indikators in Form eines SI-Indikators bedienen, welcher durch eine Substanz, insbesondere Ethylen, reversibel ausgestaltet ist. Weitere Möglichkeiten bieten reversible Indikatoren in Form von Leckage und/oder Frische-Indikatoren.

Solche und andere Indikatoren können Teil von Indikator-Substanzen sein, welche einen oder mehrere Indikatoren aufweisen. Die Indikator-Substanzen können in einer oder mehreren innenliegenden Schichten des Verpackungsmaterials angebracht sein, beispielsweise durch Drucken einer Tinte, eines Lacks od.dgl. Verwendungsform.

Das Konzept der Erfindung erstreckt sich auch - wie erläutert - auf eine Verpackungs-Produkt-Einheit mit einem Verpackungsbehältnis zur Aufnahme des Produkts und dem Verpackungsmaterial gemäß dem Konzept der Erfindung. Das Verpackungsmaterial kann wie erläutert vorteilhaft Teil einer Verpackungsfolie zum Verschließen des Verpackungsbehältnisses sein. Grundsätzlich ist darüber hinaus auch das Verpackungsmaterial vorteilhaft in Verpackungsbehältnissen od.dgl. zu finden.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:
- Fig. 1:: eine schematische Darstellung eines Verpackungsmaterials entsprechend einer ersten Ausführungsform gemäß dem Konzept der Erfindung, in Form einer Folie mit einer Struktur einer Anzahl von Schichten;
- Fig. 2:: ein Verpackungsmaterial ähnlich der Fig. 1 entsprechend einer zweiten Ausführungsform gemäß der Erfindung;
- Fig. 3:: ein abgewandeltes Verpackungsmaterial der Fig. 1 gemäß einer dritten Ausführungsform;
- Fig. 4:: ein abgewandeltes Verpackungsmaterial der Fig. 2 gemäß einer vierten Ausführungsform;
- Fig. 5:: eine Verpackung mit einem Verpackungsmaterial einer der Fig. 1 bis Fig. 4 beim Verschließen zu einer Verpackungs-Produkt-Einheit zur Verdeutlichung eines erfindungsgemäßen Verfahrens zur Kennzeichnung der Verpackungs-Produkt-Einheit;
- Fig. 6:: eine Verpackungs-Produkt-Einheit des Standes der Technik in schematischer Darstellung mit einem auf der Verpackungs-Produkt-Einheit angebrachten Aufkleber mit dem reversiblen Indikator-Label wie er in WO 2005/016654 oder WO 2006/015962 beschrieben ist;
- Fig. 7:: eine weitere Ausführungsform eines Verpackungs-materials mit einer photo-blockenden Substratschicht;
- Fig. 8:: ein als Rollenware bereitgestelltes Verpackungsmaterial, bei dem Indikatorabschnitte als Druckmuster angeordnet sind.

Fig. 1 zeigt schematisch eine Folie 10 mit einer Struktur einer Anzahl von Schichten, wobei vorliegend lediglich eine einzige als Siegelschicht ausgebildete Substratschicht vorgesehen ist, auf welcher genau eine der Schichtstruktur innenliegende Indikatorschicht 2 und eine Photo-Blocker-Schicht 3 aufgebracht ist. Die innenliegende Indikatorschicht 2 ist vorliegend abschnittsweise mit einer Indikatorsubstanz 4 versehen. Die Indikatorsubstanz 4 weist einen reversiblen Indikator auf, welcher unter hier schematisch dargestellter UV-Strahlung 5 - durch die UV-transparente Substratschicht 1 - photo-aktiviert werden kann und damit seine Erscheinung sichtbar ändert. Konkret wird vorliegend eine Färbung des Indikators in der Indikatorsubstanz 4 UVinduziert. Dies beruht auf den photochromen Eigenschaften des Indikators, die ihren Ursprung in einer Transfer-Reaktion von geladenen oder ungeladenen Wasserstoff-Atomen oder Wasserstoff-Isotopen haben. Dazu wird im Einzelnen auf Details in WO 2005/016654 und WO 2006/015962 verwiesen. Der reversible Indikator in der Indikatorsubstanz 4 ist vorliegend als Zeit-Temperatur integrierender Indikator ausgebildet, d.h. mit zunehmender Zeit und Temperatur wird die mit Aktivierung erfolgte Färbung des TTI-Indikators zurückgenommen. Ein Betrachter der Verpackungsfolie erkennt mit abnehmender Färbung des TTI-Indikators in der Indikatorsubstanz 4 somit das Alter des Produkts in der Verpackung und das Ausmaß von erhöhten Temperaturläufen, welche das Produkt in der Verpackung erfahren hat.

In einer gegenüber dem Stand der Technik überlegenen Weise ist die Photo-Blocker-Schicht 3 der Verpackungsfolie durchgehend photo-blockend ausgebildet - vorliegend handelt es sich um eine UV-Blocker-Schicht, die durchgehend UV-blockend ausgebildet ist. D.h. eine ungewollte UV-Deaktivierung von der in Fig. 1 ersichtlichen Oberseite der Verpackungsfolie 10 ist nicht möglich. Dies impliziert, dass - dies mit Hinweis auf die Stand der Technik-Lösung wie sie in Fig. 4 schematisch dargestellt ist - eine ungewollte UV-Deaktivierung auch von hinten bei verschlossener Verpackungs-Produkt-Einheit sicher vermieden ist.

Fig. 2 zeigt eine zweite Ausführungsform einer Verpackungsfolie 20 - ähnlich der ersten Ausführungsform in Fig. 1 - mit einer Substratschicht 1 einer der Schichtstruktur innenliegenden Indikatorschicht 2' und einer Photo-Blocker-Schicht 3. Die Substratschicht 1 und die Photo-Blocker-Schicht 3 sind identisch wie diejenigen der Fig. 1 ausgebildet. Die Indikatorschicht ist vorliegend durchgehend mit einer Indikatorsubstanz gebildet, die einen reversiblen Indikator aufweist, welcher unter Photo-Aktivierung seine Erscheinung sichtbar ändert - vorliegend unter UV-Aktivierung seine Erscheinung sichtbar ändert. Vorteilhaft ist die in beiden Ausführungsbeispielen dargestellte Verpackungsfolie 20 sehr einfach herstellbar - eine abschnittsweise Definition der Indikatorsubstanz in einem beschränkten Bereich wie in Fig. 1 entfällt. Dies kann erhebliche Kostenvorteile bringen.

Fig. 3 zeigt eine dritte Ausführungsform einer Verpackungsfolie 30, bei welcher - ähnlich wie bei der ersten Ausführungsform der Fig. 1 - die Indikatorsubstanz 4 nur in einem begrenzten Teilbereich der Indikatorschicht 2 angeordnet ist. Die dritte Ausführungsform sieht nun vor, dass die Photo-Blocker- Schicht 3 nur in einem mit der Indikatorsubstanz 4 kongruenten Teilbereich 9 photo-blockend ist. Dies verhindert eine ungewollte direkte Photo-Deaktivierung der Indikatorsubstanz 4 und ermöglicht dennoch die Herstellung der Schichtstruktur als eine Herstellungseinheit. Die vorliegende dritte Ausführungsform der Fig. 3 weist auch eine zusätzliche Deckschicht 12 über der Photo-Blocker-Schicht 3 auf. Letztere kann nicht nur zum Schutz, sondern beispielsweise auch zum Bedrucken od. dgl. genutzt werden.

Fig. 4 zeigt eine vierte Ausführungsform einer Verpackungsfolie 40, welche - in Abwandlung der zweiten Ausführungsform in Fig. 2 - eine durchgehend mit Indikatorsubstanz 4 versehene Indikatorschicht 2' aufweist als auch eine Photo-Blocker-Schicht 3, bei welcher jedoch photo-blockende Teilbereiche 9 derart begrenzt sind, dass sie nur Teilbereiche der Indikatorsubstanz 4 vor einer unmittelbaren ungewollten Photo-Deaktivierung schützen. Dies führt mit Einsatzbeginn der Verpackungsfolie 40 dazu, dass die nicht von Teilbereichen 9 überdeckten Bereiche der Indikatorsubstanz 4 praktisch unmittelbar photodeaktiviert werden. Gleichwohl erkennt ein Verbraucher aufgrund des durch die Teilbereiche 9 in Kontrast dargestellten Musters die gewünschte Funktion der Indikatorsubstanz 4.

Bei der vorliegenden vierten Ausführungsform 40 ist auch vorgesehen, dass neben einer bereits erläuterten Deckschicht 12 zwischen der Indikatorschicht 2' und der Photo-Blocker-Schicht 3 eine weitere Schicht 11 angeordnet ist. Die Schicht 11 kann beispielsweise zur Verbesserung der Schichtstruktureigenschaften, etwa als Haftvermittlerschicht od. dgl., dienen oder auch eine funktionelle Wirkung haben, beispielsweise eine Barriereschicht od. dgl. sein.

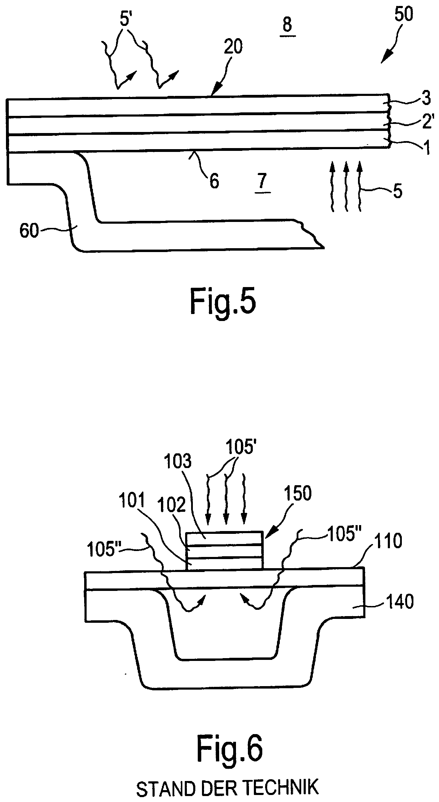

Fig. 5 zeigt eine Verpackung bzw. eine Verpackungs-Produkt-Einheit 50 -z.B. mit einer Verpackungsfolie 20 wie sie in Fig. 2 dargestellt wurde - letztere ist zum Verschließen eines schematisch dargestellten Verpackungsbehältnisses 60 ausgelegt. Fig. 5 verdeutlicht dazu das Kennzeichnungsverfahren der Verpackungs-Produkt-Einheit, bei dem durch UV-Strahlung 5 der reversible Indikator in der Indikator-schicht 2' beim Verschließen der Verpackung - und zwar von einer dem Produkt zugewandten Seite 6 der Verpackungsfolie - UV-aktiviert wird. Dazu ist insbesondere die Substratschicht 1 - ebenso wie bei den zuvor erläuterten Ausführungsbeispielen von Verpackungsfolien 10 bis 40 - nicht nur siegelfähig ausgebildet, sondern darüber hinaus handelt es sich bei der Substratschicht 1 um eine der VerpackungsInnenseite 7 näher zu liegende Schicht im Vergleich zur Indikatorschicht 2, 2', welche vorliegend UV-transparent ausgebildet ist. Zusammenfassend umfasst die erste bis vierte Ausführungsform einer Verpackungsfolie 10, 20, 30, 40 also eine UV-transparente und siegelfähige Substratschicht 1, eine UV-blockende UV-Blocker-Schicht als Deckschicht 3 und eine dazwischenliegende Indikatorschicht 2, 2' mit dem UVchromen Indikator der Indikatorsubstanz 4.

Eine ungewollte UV-Aktivierung durch UV-Strahlung 5' von der Außenseite 8 der Verpackungs-Produkt-Einheit 50 wird bei Verwendung von Verpackungsfolien 30, 40 sicher vermieden, weil die außenliegende Deckschicht durchgehend UV-blockend ist; gleichwohl kann die innenliegende Substratschicht 1 UV-transparent ausgebildet sein.

Im Unterschied dazu weist die Ausführungsform des Standes der Technik wie sie in Fig. 6 dargestellt ist, nicht nur erhöhten Fertigungsaufwand auf, sondern erweist sich auch als unzuverlässig. Gemäß dem Stand der Technik ist nämlich ein die Qualität des Produkts anzeigendes Merkmal mit reversiblem Indikator lediglich als Aufkleber 150 auf einer herkömmlichen Verpackungsfolie 110 eines herkömmlichen Behältnisses 140 aufbringbar. Zwar weist ein solcher Aufkleber 150 üblicherweise auch eine UV-Blocker-Schicht 103 und eine Substratschicht 101 auf, zwischen denen eine Indikatorschicht 102 angebracht ist - dies hält jedoch lediglich von direkt oben einfallende UV-Strahlung 5' von einer ungewollten Deaktivierung des in der Indikatorschicht 102 angebrachten Indikators ab. Dagegen kann weitere UV-Strahlung 105" durch die üblicherweise UV-transparente Verpackungsfolie 110 und das üblicherweise UV-transparente Substrat 101 von hinten an die Indikatorschicht 102 gelangen und so den darin untergebrachten Indikator ungewollt deaktivieren.

Zusammenfassend betrifft die Erfindung ein Verpackungsmaterial aufweisend eine Struktur einer Anzahl von Schichten, die erfindungsgemäß umfasst: eine Substratschicht 1; wenigstens eine der Schichtstruktur innenliegende Indikator-Schicht 2, 2', die wenigstens abschnittsweise eine Indikator-Substanz 4 mit einem reversiblen Indikator aufweist, welcher unter Photoaktivierung, seine Erscheinung sichtbar ändert; eine Photo-Blocker-Schicht 3, die wenigstens in einem Teilbereich, vorteilhaft durchgehend, photo-blockend ist.

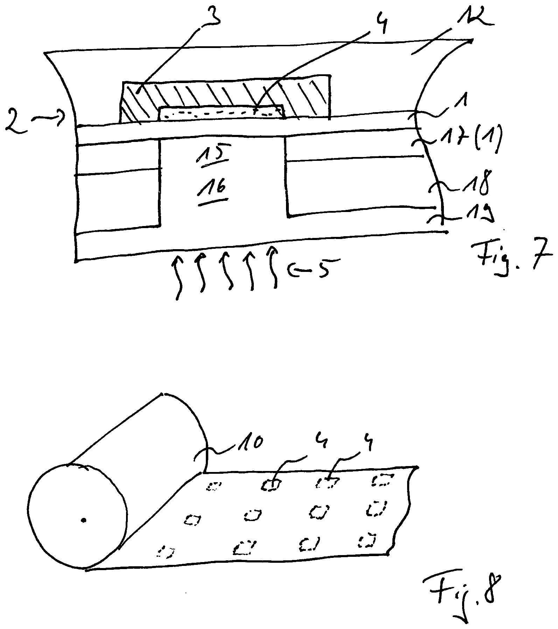

Fig. 7 zeigt schematisch eine Folie 10 (Verpackungsmaterial) mit einer Schichtstruktur, wobei in der Zeichnungsebene unten die Produktseite der Folie 10 gezeigt ist. Die Folie 10 umfasst eine Indikatorschicht 2, die von mindestens einer als Indikatorabschnitt(flächenbegrenzter - d.h. nicht durchgehender - Bereich) angeordneten Indikatorsubstanz 4 gebildet ist. Die Indikatorsubstanz 4 ist überdeckt von einer Photo-Blocker-Schicht 3, wobei auch die Photo-Blocker-Schicht 3 nicht durchgehend angeordnet ist sondern nur lokal begrenzt aufgebracht, vorzugsweise aufgedruckt, ist. Oberhalb und seitlich der Photo-Blocker-Schicht 3 befindet sich eine Deckschicht 12, auf die auch verzichtet werden kann. Unterhalb der Photo-Blocker-Schicht 3 befindet sich eine photo-transparente Substratschicht 1 unterhalb der sich eine als Aluminiumschicht ausgebildete photo-blockende Schicht 17 befindet. Bei einer alternativen Ausführungsform kann auf die dargestellte photo-transparente Substratschicht 1 verzichtet werden, insbesondere dann, wenn eine photo-blockende Schicht, die die Schicht 17, die Substratschicht 1 bildet (Bezugszeichen 1 für diese Ausführungsform in Klammern). Unterhalb der aus Aluminium, wie Aluminiumfolie oder -schicht, ausgebildeten photo-blockenden Schicht 17 befindet sich eine weitere, hier als PET-Schicht, ausgebildete photo-blockende Schicht 18, unterhalb der sich eine Siegelschicht 19 befindet. In den beiden photo-blockenden Schichten 17, 18 ist jeweils eine Aussparung 15, 16 vorgesehen, die sich überdecken, so dass Licht 5 von hinten her zur Aktivierung der Indikatorsubstanz 4 zu dieser durchdringen kann.

Fig. 8 zeigt eine als Rollenware ausgebildete Folie 10. Lediglich angedeutet sind durch strichlierte Linien die Positionen von Indikatorsubstanzabschnitten, die als Druckmuster aufgebracht sind.

## Patentansprüche

1. Verpackungsmaterial, nämlich Folie (10) oder flaches Material zum Herstellen einer Verpackung mit der Folie und/oder einem Verpackungsbehältnis, aufweisend eine Schichtstruktur einer Anzahl von Schichten, die umfasst:
- eine Substratschicht (1);
- wenigstens eine der Schichtstruktur innenliegende Indikator-Schicht (2, 2'), die wenigstens abschnittsweise eine Indikator-Substanz (4) mit einem reversiblen Indikator aufweist, welcher unter Photo-Aktivierung seine Erscheinung sichtbar ändert;
- eine Photo-Blocker-Schicht (3), welche wenigstens in einem Teilbereich (9) photo-blockend ist.

2. Verpackungsmaterial nach Anspruch 1, **dadurch gekennzeichnet, dass** die Schichtstruktur als Herstellungseinheit darstellbar ist.

3. Verpackungsmaterial nach Anspruch 1 oder 2, **dadurch gekennzeichnet, dass** der Teilbereich wenigstens diejenigen Abschnitte der Indikator-Schicht (2, 2') überdeckt, welche eine Indikator-Substanz (4) aufweisen.

4. Verpackungsmaterial nach einem der Ansprüche 1 bis 3, **dadurch gekennzeichnet, dass** die Photo-Blocker-Schicht (3) durchgehend photo-blockend ist.

5. Verpackungsmaterial nach einem der Ansprüche 1 bis 4,
**dadurch gekennzeichnet, dass** die Indikator-Substanz (4) durchgehend in der Indikator-Schicht angeordnet ist, oder dass die Indikatorschicht (2, 2') von in mindestens einem abgegrenzten Flächenbereich angeordnetem, vorzugsweise aufgedrucktem, Indikatormaterial (4) gebildet ist, welches vorzugsweise, insbesondere im Falle der Ausbildung des Verpackungsmaterials als Rollenware, als Druckmuster aufgebracht ist.

6. Verpackungsmaterial nach einem der Ansprüche 1 bis 5,
**dadurch gekennzeichnet, dass** die Indikator-Schicht (2, 2') und die Photo-Blocker-Schicht (3) direkt aufeinander angebracht sind.

7. Verpackungsmaterial nach einem der Ansprüche 1 bis 6,
**dadurch gekennzeichnet, dass** zwischen der Indikator-Schicht (2, 2') durch die Photo-Blocker-Schicht (3) wenigstens eine weitere Schicht (11) angeordnet ist.

8. Verpackungsmaterial nach einem der Ansprüche 1 bis 7,
**dadurch gekennzeichnet, dass**
die Photo-Aktivierung eine UV-Aktivierung und die Photo-Blocker Schicht (3) eine UV-Blocker-Schicht (103) ist.

9. Verpackungsmaterial nach einem der Ansprüche 1 bis 8,
**dadurch gekennzeichnet, dass**
der Indikator photochrome Eigenschaften aufweist derart, dass eine photoinduzierte, insbesondere UV-induzierte, Färbung des Indikators erfolgt.

10. Verpackungsmaterial nach einem der Ansprüche 1 bis 9,
**dadurch gekennzeichnet, dass**
die Photo-, insbesondere UV-, Blocker- Schicht (3) eine außenliegende Schicht ist oder
eine der Schichtstruktur innenliegende Schicht ist, dies aber auf einer der Verpackungsaußenseite näher zu liegenden Seite der Indikator-Schicht (2, 2').

11. Verpackungsmaterial nach einem der Ansprüche 1 bis 10,
**dadurch gekennzeichnet, dass**
auf einer der Verpackungsinnenseite (7) näher zu liegenden Seite der Indikator-Schicht (2, 2') liegende weitere Schichten der Schichtstruktur nicht photo-blockend, insbesondere nicht UV-blockend sind, vorzugsweise photo-transparent, insbesondere UV-transparent sind, oder
dass mindestens eine auf einer der Verpackungsinnenseite (7) näher zu liegenden Seite der Indikator-Schicht (2, 2') liegende Schicht (17, 18) der Schichtstruktur photo-blockend, insbesondere UV-blockend, ist und dass in der mindestens einen photo-blockenden Schicht eine Materialaussparung (15, 16) vorgesehen ist, durch die hindurch das Indikatormaterial (4) photo-aktivierbar ist.

12. Verpackungsmaterial nach einem der Ansprüche 1 bis 11,
**dadurch gekennzeichnet, dass**
wenigstens eine weitere, vorzugsweise alle weiteren Schichten der Schichtstruktur nicht photo-blockend, insbesondere nicht UV-blockend sind, vorzugsweise photo-transparent, insbesondere UV-transparent sind.

13. Verpackungsmaterial nach einem der Ansprüche 1 bis 12,
**dadurch gekennzeichnet, dass**
wenigstens eine weitere Schicht, insbesondere eine nicht photo-blockende, vorzugsweise eine nicht UV-blockende Schicht, eine Siegelschicht oder funktionale Schicht ist, insbesondere Gas-Barriere-Schicht oder Feuchtigkeits-Barriere-Schicht ist.

14. Verpackungsmaterial nach einem der Ansprüche 1 bis 13,
**dadurch gekennzeichnet, dass**
die photochromen Eigenschaften des Indikators auf einer Transfer-Reaktion basieren, insbesondere einem Transfer von geladenen oder ungeladenen Wasserstoff-Atomen oder Wasserstoff-Isotopen.

15. Verpackungsmaterial nach einem der Ansprüche 1 bis 14,
**dadurch gekennzeichnet, dass**
der reversible Indikator ein TTI-Indikator ist, welcher durch Zeit und Temperatur reversibel ausgestaltet ist.

16. Verpackungsmaterial nach einem der Ansprüche 1 bis 15,
**dadurch gekennzeichnet, dass**
der reversible Indikator ein GI-Indikator ist, welcher durch Gas, insbesondere O₂, CO₂, reversibel ausgestaltet ist.

17. Verpackungsmaterial nach einem der Ansprüche 1 bis 16,
**dadurch gekennzeichnet, dass**
der reversible Indikator ein SI-Indikator ist, welcher durch eine Substanz, insbesondere Ethylen, reversibel ausgestaltet ist.

18. Verpackungsmaterial nach einem der Ansprüche 1 bis 17,
**dadurch gekennzeichnet, dass**
der reversible Indikator ein Leckage-Indikator und/oder Frische-Indikator ist.

19. Verpackungsmaterial nach einem der Ansprüche 1 bis 18,
**dadurch gekennzeichnet, dass**
ein oder mehrere Indikator-Substanzen (4) einen oder mehrere Indikatoren aufweisen, insbesondere diese in einer oder mehreren innenliegenden Schichten angeordnet sind.

20. Verpackungsmaterial nach einem der Ansprüche 1 bis 19,
**dadurch gekennzeichnet, dass**
die Indikator-Substanz (4) druckbar ist, insbesondere als Tinte, Lack od.dgl. Verwendungsform.

21. Verpackung mit einem Verpackungsmaterial nach einem der vorhergehenden Ansprüche.

22. Verpackungs-Produkt-Einheit mit einem Verpackungsbehältnis (140) zur Aufnahme des Produkts und dem Verpackungsmaterial nach einem der Ansprüche 1 bis 20, insbesondere Verpackungsfolie (110), zum Verschließen des Verpackungsbehältnisses (40).

23. Verfahren zur Kennzeichnung einer Verpackung, insbesondere einer Verpackungs-Produkt-Einheit (30) aufweisend die Schritte:
- Herstellen eines Verpackungsmaterials nach einem der Ansprüche 1 bis 20, insbesondere für ein Verpackungsbehältnis (40) und/oder eine Verpackungsfolie (20), wobei die Herstellung, insbesondere zusammen, mit einer Photo-, insbesondere UV-, Blocker Schicht (3) erfolgt, welche wenigstens in einem Teilbereich (9) photo-blockend ist;

24. Verfahren nach Anspruch 23, weiter aufweisend einen oder mehrere der Schritte:
- Herstellen der Verpackung mit dem Verpackungsmaterial;
- Einbringen des Produkts in die Verpackung;
- Aktivieren des reversiblen Indikators beim Verschließen der Verpackung von einer dem Produkt zugewandten Seite (6) des Verpackungsmaterials.

25. Verfahren zur Prüfung einer Verpackungs-Produkt-Einheit (30) zur Qualitätsprüfung des Produkts, aufweisend die Schritte:
- Durchführen des Verfahrens zur Kennzeichnung nach einem der Ansprüche 23 oder 24;
- Bestimmen des Grads der Entfärbung des reversiblen Indikators;
- Rückschließen auf die Qualität des Produktes.

## Claims

1. Packaging material, specifically a film (10) or a planar material for producing a packaging using the film and/or a packaging container, comprising a layered structure made up of a plurality of layers and comprising:
- a substrate layer (1);
- at least one indicator layer (2, 2') on the inside of the layered structure, at least in portions of which comprise an indicator substance (4) having a reversible indicator that visibly changes its appearance as a result of photo activation;
- a photo-blocker layer (3) which is photo-blocking at least in a portion (9).

2. Packaging material according to claim 1, **characterised in that** the layered structure can be presented as a production unit.

3. Packaging material according to either claim 1 or claim 2, **characterised in that** the portion covers at least those parts of the indicator layer (2, 2') that comprise an indicator substance (4).

4. Packaging material according to any of claims 1 to 3, **characterised in that** the photo-blocker layer (3) is completely photo-blocking.

5. Packaging material according to any of claims 1 to 4, **characterised in that** the indicator substance (4) is completely arranged in the indicator layer, or **in that** the indicator layer (2, 2') is formed by indicator material (4) that is arranged in at least one delimited surface region, is preferably imprinted and is preferably applied, in particular when forming the packaging material, as a roll or as a printed pattern.

6. Packaging material according to any of claims 1 to 5, **characterised in that** the indicator layer (2, 2') and the photo-blocker layer (3) are directly attached, one on top of the other.

7. Packaging material according to any of claims 1 to 6, **characterised in that** at least one additional layer (11) is arranged between the indicator layer (2, 2') and the photo-blocker layer (3).

8. Packaging material according to any of claims 1 to 7, **characterised in that** the photo activation is a UV activation and the photo-blocker layer (3) is a UV-blocker layer (103).

9. Packaging material according to any of claims 1 to 8, **characterised in that** the indicator has photochromic properties so as to provide photo-induced, in particular UV-induced, colouring of the indicator.

10. Packaging material according to any of claims 1 to 9, **characterised in that** the photo-blocker layer (3), in particular the UV-blocker layer, is an external layer or is a layer on the inside of the layer structure, said layer however being on a side of the indicator layer (2, 2') that is closer to outer side of the packaging material.

11. Packaging material according to any of claims 1 to 10, **characterised in that** additional layers of the layered structure, which are arranged on a side of the indicator layer (2, 2') that is closer to the packaging inner side (7), are not photo-blocking, in particular not UV-blocking, but are preferably photo-transparent, in particular UV-transparent, or in that at least one layer (17, 18) of the layered structure, which layer is arranged on a side of the indicator layer (2, 2') that is closer to the packaging inner side (7), is photo-blocking, in particular UV-blocking, and **in that** a material cut-out (15, 16) is made in the at least one photo-blocking layer, though which cut-out the indicator material (4) can be photo-activated.

12. Packaging material according to any of claims 1 to 11, **characterised in that** at least one additional layer, preferably all additional layers, of the layered structure is/are not photo-blocking, in particular not UV-blocking, but are preferably photo-transparent, in particular UV-transparent.

13. Packaging material according to any of claims 1 to 12, **characterised in that** at least one additional layer, in particular a non-photo-blocking layer, preferably a non-UV-blocking layer, is a sealing layer or a functional layer, in particular a gas barrier layer or moisture barrier layer.

14. Packaging material according to any of claims 1 to 13, **characterised in that** the photochromic properties of the indicator are based on a transfer reaction, in particular a transfer of charged or uncharged hydrogen atoms or hydrogen isotopes.

15. Packaging material according to any of claims 1 to 14, **characterised in that** the reversible indicator is a TTI indicator, which can be reversed by means of time and temperature.

16. Packaging material according to any of claims 1 to 15, **characterised in that** the reversible indicator is a GI indicator, which can be reversed by means of gas, in particular O₂ or CO₂.

17. Packaging material according to any of claims 1 to 16, **characterised in that** the reversible indicator is an SI indicator which can be reversed by means of a substance, in particular ethylene.

18. Packaging material according to any of claims 1 to 17, **characterised in that** the reversible indicator is a leak indicator and/or freshness indicator.

19. Packaging material according to any of claims 1 to 18, **characterised in that** one or more indicator substances (4) comprises one or more indicators, these in particular being arranged in one or more internal layers.

20. Packaging material according to any of claims 1 to 19, **characterised in that** the indicator substance (4) can be printed, in particular in the form of an ink, paint or similar use.

21. Packaging comprising a packaging material according to any of the preceding claims.

22. Packaging-product unit comprising a packaging container (140) for receiving the product and comprising the packaging material according to any of claims 1 to 20, in particular a packaging film (110), for sealing the packaging container (40).

23. Method for marking a packaging, in particular a packaging-product unit (30), comprising the steps of:
- producing a packaging material according to any of claims 1 to 20, in particular for a packaging container (40) and/or a packaging film (20), wherein the production takes place in particular together with a photo-blocker layer (3), in particular a UV-blocker layer, which is photo-blocking at least in a portion (9).

24. Method according to claim 23, further comprising one or more of the following steps:
- producing the packaging using the packaging material;
- introducing the product into the packaging; and
- activating the reversible indicator when sealing the packaging from a side (6) of the packaging material that faces the product.

25. Method for testing a packaging-product unit (30) in order to assess the quality of the product, comprising the steps of:
- carrying out the marking method according to either claim 23 or claim 24;
- determining the degree of discolouration of the reversible indicator; and
- concluding the quality of the product.

## Revendications

1. Matériau d'emballage, en l'occurrence feuille (10) ou matériau plat pour la fabrication d'un emballage avec la feuille et/ou un contenant d'emballage, présentant une structure en couches constituée d'un certain nombre de couches, qui comprend :
- une couche de substrat (1) ;
- au moins une couche indicatrice (2, 2') située à l'intérieur de la structure en couches, et qui comprend au moins par secteurs, une substance indicatrice (4) avec un indicateur réversible, qui modifie son aspect de manière visible par photo-activation ;
- une couche d'agent photo-bloquant (3), qui est photo-bloquante dans au moins une zone partielle (9).

2. Matériau d'emballage selon la revendication 1, **caractérisé en ce que** la structure en couches peut constituer une unité de fabrication.

3. Matériau d'emballage selon la revendication 1 ou la revendication 2, **caractérisé en ce que** ladite zone partielle recouvre au moins les secteurs de la couche indicatrice (2, 2'), qui comprennent une substance indicatrice (4).

4. Matériau d'emballage selon l'une des revendications 1 à 3, **caractérisé en ce que** la couche d'agent photo-bloquant (3) est photo-bloquante en continu.

5. Matériau d'emballage selon l'une des revendications 1 à 4, **caractérisé en ce que** la substance indicatrice (4) est agencée en continu dans la couche indicatrice, ou **en ce que** la couche indicatrice (2, 2') est formée par un matériau indicateur (4) agencé, de préférence imprimé, au moins dans une zone de surface délimitée, qui de préférence, notamment dans le cas de la configuration du matériau d'emballage sous forme de produit en rouleau, est appliqué en tant que motif d'impression.

6. Matériau d'emballage selon l'une des revendications 1 à 5, **caractérisé en ce que** la couche indicatrice (2, 2') et la couche d'agent photo-bloquant (3) sont placées directement l'une sur l'autre.

7. Matériau d'emballage selon l'une des revendications 1 à 6, **caractérisé en ce qu'**entre la couche indicatrice (2, 2') et la couche d'agent photo-bloquant (3) est agencée au moins une autre couche supplémentaire (11).

8. Matériau d'emballage selon l'une des revendications 1 à 7, **caractérisé en ce que** la photo-activation est une activation par les UV, et la couche d'agent photo-bloquant (3) est une couche bloquant les UV (103).

9. Matériau d'emballage selon l'une des revendications 1 à 8, **caractérisé en ce que** l'indicateur présente des propriétés photochromes de façon telle, qu'il se produise une coloration photo-induite de l'indicateur, notamment induite par les UV.

10. Matériau d'emballage selon l'une des revendications 1 à 9, **caractérisé en ce que** la couche d'agent photo-bloquant (3), notamment bloquant les UV, est une couche située à l'extérieur, ou bien une couche située à l'intérieur de la structure en couches, mais sur un côté de la couche indicatrice (2, 2'), qui est situé plus près du côté extérieur de l'emballage.

11. Matériau d'emballage selon l'une des revendications 1 à 10, **caractérisé en ce que** d'autres couches supplémentaires de la structure en couches, qui sont situées sur un côté de la couche indicatrice (2, 2'), situé plus près du côté intérieur (7) de l'emballage, ne sont pas photo-bloquantes, et notamment ne bloquent pas les UV, mais sont de préférence photo-transparentes, et notamment transparentes aux UV, ou bien **en ce qu'**une couche (17, 18) de la structure en couches, située sur un côté de la couche indicatrice (2, 2'), situé plus près du côté intérieur (7) de l'emballage, est photo-bloquante, et bloque notamment les UV, et **en ce que** dans ladite au moins une couche photo-bloquante est prévu un évidement de matière (15, 16) à travers lequel le matériau indicateur (4) peut être photo-activé.

12. Matériau d'emballage selon l'une des revendications 1 à 11, **caractérisé en ce qu'**au moins une autre couche supplémentaire, de préférence toutes les autres couches supplémentaires de la structure en couches sont non photo-bloquantes, et notamment ne bloquent pas les UV, et sont de préférence photo-transparentes, notamment transparentes aux UV.

13. Matériau d'emballage selon l'une des revendications 1 à 12, **caractérisé en ce qu'**au moins une autre couche supplémentaire, notamment une couche non photo-bloquante, de préférence une couche ne bloquant pas les UV, est une couche de scellage ou une couche fonctionnelle, notamment une couche de barrière aux gaz ou une couche de barrière à l'humidité.

14. Matériau d'emballage selon l'une des revendications 1 à 13, **caractérisé en ce que** les propriétés photochromes de l'indicateur se fondent sur une réaction de transfert, notamment un transfert d'atomes d'hydrogène chargés ou non chargés ou d'isotopes de l'hydrogène.

15. Matériau d'emballage selon l'une des revendications 1 à 14, **caractérisé en ce que** l'indicateur réversible est un indicateur TTI, qui est rendu réversible sous l'effet du temps et de la température.

16. Matériau d'emballage selon l'une des revendications 1 à 15, **caractérisé en ce que** l'indicateur réversible est un indicateur GI, qui est rendu réversible sous l'effet d'un gaz, notamment O₂ ou CO₂.

17. Matériau d'emballage selon l'une des revendications 1 à 16, **caractérisé en ce que** l'indicateur réversible est un indicateur SI, qui est rendu réversible sous l'effet d'une substance, notamment de l'éthylène.

18. Matériau d'emballage selon l'une des revendications 1 à 17, **caractérisé en ce que** l'indicateur réversible est un indicateur de fuites et/ou un indicateur de fraîcheur.

19. Matériau d'emballage selon l'une des revendications 1 à 18, **caractérisé en ce qu'**une ou plusieurs substances indicatrices (4) comportent un ou plusieurs indicateurs, ceux-ci étant notamment placés dans une ou plusieurs couches situées vers l'intérieur.

20. Matériau d'emballage selon l'une des revendications 1 à 19, **caractérisé en ce que** la substance indicatrice (4) est imprimable, et est notamment utilisable sous forme d'encre, vernis ou similaire.

21. Emballage comprenant un matériau d'emballage selon l'une des revendications précédentes.

22. Unité formée d'un produit et d'un emballage, comprenant un contenant d'emballage (140) destiné à recevoir le produit, et le matériau d'emballage selon l'une des revendications 1 à 20, notamment une feuille d'emballage (110), pour fermer le contenant d'emballage (40).

23. Procédé de caractérisation d'un emballage, notamment d'une unité (30) formée d'un produit et d'un emballage, comportant les étapes suivantes :
- fabrication d'un matériau d'emballage selon l'une des revendications 1 à 20, notamment pour un contenant d'emballage (40) et/ou une feuille d'emballage (20), la fabrication s'effectuant notamment ensemble, avec une couche d'agent photo-bloquant (3), bloquant notamment les UV, qui est photo-bloquante dans au moins une zone partielle (9).

24. Procédé selon la revendication 23, comportant en outre une ou plusieurs des étapes suivantes :
- fabrication de l'emballage à l'aide du matériau d'emballage ;
- insertion du produit dans l'emballage ;
- activation de l'indicateur réversible lors de la fermeture de l'emballage, à partir d'un côté (6) du matériau d'emballage, qui est dirigé vers le produit.

25. Procédé de contrôle d'une unité (30) formée d'un produit et d'un emballage en vue du contrôle qualité du produit, comportant les étapes suivantes :
- mise en oeuvre du procédé de caractérisation selon l'une des revendications 23 ou 24 ;
- détermination du degré de décoloration de l'indicateur réversible ;
- déductions quant à la qualité du produit.
